# EUROPEAN PATENT APPLICATION

(11) **EP 1 236 705 A1**
(43) Date of publication of application: **04.09.2002**
(21) Application number: 01200646.6
(22) Date of filing: 22.02.2001
(51) Int. Cl.: C04B 41/87

(54) **Coated glazed articles and method for producing the same**

(71) Applicant: Atofina Vlissingen B.V., 4389 PD Vlissingen (NL)
(72) Inventor: Hoekman, Leendert Cornelis, 4461 NM Goes (NL)
(74) Representative: Prins, Adrianus Willem

(57) **Abstract**

The invention relates to a method for producing glazed articles, such as tiles, having improved properties, as well as to these articles per se. More in particular, the invention relates to glazed ceramic articles, such as glazed tiles, having a glossy appearance and to a method for preparing these articles.

According to the invention, glazed article having a temperature of at least 400°C are contacted with a metal containing precursor, whereby a metal oxide coating on said article is formed. The thus obtained articles are improved with respect to their coefficient of friction and/or abrasion resistance, whereas the gloss is maintained.

## Description

The invention relates to a method for producing glazed articles, such as tiles, as well as to these articles *per se.* More in particular, the invention relates to glazed ceramic articles, such as glazed tiles, having a glossy appearance and to a method for preparing these articles.

Glazed articles, such as tiles, are formed by a base material, *e.g.* a clay based material, on which a first layer is applied, the engobe. This is to hide colour and defects of the body. After that a second layer is applied, the glaze, which after firing evolves into a glass-like surface. In some processes the firing is done in two steps, first the clay body and thereafter the now ceramic body with the applied layers. This is referred to as the double firing process. The function of the glaze layer is both aesthetic and protective. A design consisting of a mixture of ceramic pigments, *e.g.* by screen printing, may be applied under the glaze. A very important quality of glazed ceramic articles, particularly tiles, is the wear resistance. Ceramic materials are regarded as hard but brittle. When particles are forced against the surface, material degradation arises due to shear stresses which appear in front of said particles. The tension starting from the particles, are able to nucleate cracks going beyond the hardness or resistance of the surface. If these cracks propagate, material will be removed and this may cause scratches on the surface. Finally the aesthetic quality is lost. It also has to be considered that the glazed surface, Si-O-Si bonds are weakened by the presence of alkaline and or earth-alkaline oxides. In the case of floor tiles, thermal treatments, used to sinter ceramic materials often develop stress, due to differences in thermal expansion coefficients. These micro-cracks could nucleate cracks, lowering the surface hardness.

Several approaches are used to enhance the wear resistance. A layer with hard grits or granulates that increases the rugosity of the tile as well as the hardness. The rugosity hinders the abrasive particle to follow a straight line, interrupting scratches. Also silk-screen applications of hard glazes, usually matt compositions rich in *e.g.* Al₂O₃, are used on the tile surface.

Another approach is the use of composite materials. An example of this are glazes containing crystalline phases of materials with high Vickers micro-hardness, for instance zirconium silicate, bearing glazes. In this case thermal treatment is critical. Obtained surfaces are not transparent but are either opaque or matt. Further, to reduce the visual effect of wear, the design plays a significant role. Since the effect of abrasion is that the tone seems whiter than original, glazes with white colours show less abrasion. Also the effect of colour in a body can diminish the loss of aspect, *e.g.* the design that looks after granite. It is well known that the loss of shine occurs in the first stages of abrasion. Consequently glazes with lower degree of gloss will exhibit loss of shine to a lesser extent.

By means of above described procedures, it is possible to prepare glazed surfaces which present a high scratch resistance. A disadvantage is that such methods result in a low gloss.

The present invention is particularly directed to glossy ceramics. Glossy ceramics are defined herein as articles having an initial gloss level on the surface of 85-92 ‰ measured at 60°.

In the prior art it has been suggested to add metal-oxides into the glaze for decorative purposes and/or to influence qualities like chemical resistance or abrasion resistance of the glaze layer on tiles. SU-A-1270135 and SU-A-1698204 describe the preparation of such glazes. EP-A-270024 describes a process to apply materials on top such as TiN through a sputtering process at lowered pressure.

The present invention seeks to improve friction and abrasion properties of glazed ceramics by providing a coating on the glaze.

In the art, several methods are known to provide coatings on glass substrates. US-A-4 144 362 discloses a method for coating bottles by applying a coating of stannic oxide to a glass surface, using liquid monobutyltin trichloride, in order to reduce the coefficient of friction of the bottles. WO-A-96/26 163 relates to a process for producing a protecting coating on a surface of a glass or ceramic article, said coating having an improved resistance to caustic wash treatments. The coating thickness is preferably between 450 and 900 Å. EP-A-0 485 646 discloses a process for preparing a coating for glass bottles, which comprises the step of bringing a glass bottle having an external surface temperature of 550 to 700°C into contact with a material which can form a coating comprising SnO₂ or TiO₂ so as to form a coating comprising SnO₂ or TiO₂ at a thickness of 400 to 1000 Å.

These prior art methods relate to the treatment of glass surfaces, particularly surfaces of glass bottles, in order to lower the coefficient of friction, and/or to improve their chemical resistance. Contrarily to bottles, most other articles, such as floor tiles, are not subjected to surface to surface contact of the glazed surfaces, but rather to abrasion, which is caused, *e.g.* by walking over the tiles. Abrasive materials like sands are typically present and might damage the glaze in case of tiles, when people walk over them. The above-mentioned application of wax does not prevent the abrasive effect. Moreover, it would cause a decrease in the coefficient of friction, which, in the case of floor tiles, could give rise to dangerous situations.

The present invention is directed to a method for improving the coefficient of friction and abrasion resistance of glazed articles, in particular of glossy ceramic articles, such as tiles. In order to keep their attractive appearance, it is required that the gloss of the articles is not reduced by this method. Another object is to provide for a method which improves the abrasion resistance of the articles produced, as expressed in loss of gloss resulting from abrasive action.

As follows from the above, an "improved coefficient of friction" is defined herein as a coefficient of friction that is increased compared to uncoated articles. Coefficients of friction may be measured using means known to the skilled person, *e.g*. by moving an object along the surface of the article. The friction force (expressed in N) is the force required to move the object. The friction force is directed oppositely to the motion of the object. The ratio of friction force to the load of the object (also expressed in N) is called the coefficient of friction.

An "improved abrasion resistance" is defined herein as an increased resistance to abrasion when compared with uncoated articles. Abrasion resistance may *e.g.* be quantified by measuring the remaining gloss of an article when it is subjected to abrasion for a given period of time.

Surprisingly, it was found that by a method comprising contacting a glazed article having a relatively low temperature of at least 400°C with a metal containing coating precursor, whereby a metal oxide coating on said article is formed, articles can be formed having improved friction properties and/or abrasion resistance, whereas the gloss of said articles is not substantially adversely affected or even improved. Also, the sensitivity of the gloss to abrasive action of the articles formed by the method of the invention is improved, as compared to articles which are not coated with the metal oxide coating in accordance with the invention. The decreased sensitivity to abrasion, can *e.g.* be demonstrated by abrasion tests, which tests typically comprise subjecting articles formed in accordance with the invention for a prolonged period of time to abrasive action. In such duration test, the remaining gloss, *e.g.* expressed as percentage of initial gloss, remains constant for a longer period of time and the slope of degradation in time is less, as compared to untreated glazed articles.

Wherever in the present description herein-below reference is made to tiles, such as floor tiles, it will be understood that the invention may be applied equally well to other glazed articles, without departing from the spirit of the invention.

The method of the invention can advantageously be carried out using an atmospheric chemical vapour deposition (ACVD) process. Chemical vapour deposition is a technique which enables the deposition of a solid material on a hot substrate through a chemical reaction out of the vapour phase. In this preferred embodiment, the chemical vapour deposition is carried out under normal (atmospheric) pressure.

The surface of a floor tile is often a ceramic glaze. Ceramic glazes are coatings of a glassy or glass-ceramic nature, which seals the surface of ceramic bodies. The glazes are mainly made up from frits. A typical analysis of transparent frits, used in a single fired process, is listed in Table 1.

**Table 1:**

| Typical composition in wt.% of frits. | |
|---|---|
| Compound | wt.% |
| SiO₂ | 50-60 |
| Al₂O₃ | 4-7 |
| B₂O₃ | 3-6 |
| CaO | 8-10 |
| MgO | 1-3 |
| Na₂O | 1 |
| K₂O | 2-4 |
| ZnO | 8-10 |
| BaO | 2 |

Surface hardness, friction properties, gloss and design are the dominant aspects for tile quality.

Application of the metal oxide through ACVD process is preferred for several reasons. The adherence, porosity, uniformity and possible shrinkage of the coating layers applied by ACVD are superior compared to (wet) spraying and drying processes as nowadays used. Furthermore, the application at high temperature can be implemented into the existing production process of tiles and can be carried out at normal atmospheric conditions. Also, the adhesion of the coating layer to the substrate is superior compared to sputtered films. The obtained surface may be characterised according the following properties:
- Gloss, *e.g.* by measurement of reflected light at a fixed angle
- Scratch hardness, according to European standard; EN 101
- Abrasion resistance, *e.g.* by subjecting the article to simulated abrasive conditions
- Chemical resistance, according to European standard; EN 122

The main process parameters for application of the metal-oxide coating are:
- Application temperature, temperature of the articles to be coated
- Type of metal oxide, type of precursor
- Layer thickness of applied metal-oxide, concentration precursor, vapour speed.

It is preferred to carry out the method of the invention such that the temperature of the article to be coated is not more than 700°C, preferably between 450 and 700°C, more preferably between 475 and 525°C. Articles coated at this temperature display a very favourable abrasion resistance, as expressed in decrease of gloss, when subjected to abrasion for a prolonged period of time. It was found that when the application temperature is about 500°C, the gloss reduction due to prolonged abrasion was minimal.

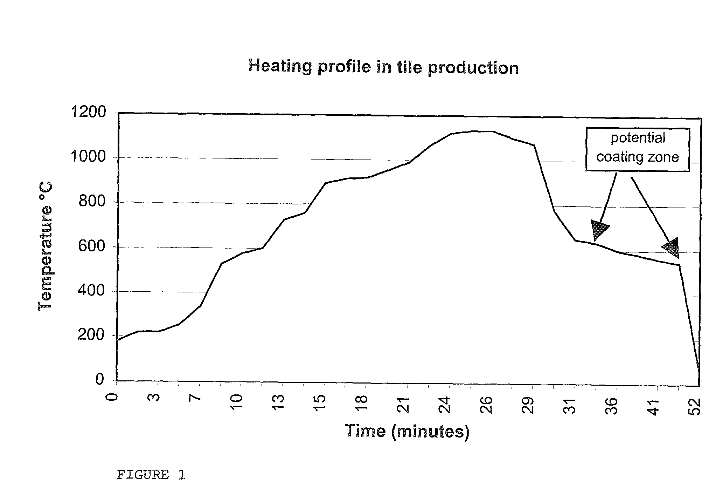

In tile production, the tiles are typically transported on a conveyor belt through a kiln. The total residence time of the tiles in the kiln is typically about 1h, during which the temperature is increased from 180°C to more than 1100°C, after which the tiles cool back to about ambient temperature. The method of the invention can conveniently be incorporated at any suitable stage in this heating/cooling process, so as to choose the suitable temperature. Thus no further measures to control the temperature are required. In Fig. 1 a typical heating profile for tile production is shown. The arrows in Fig. 1 indicate where the coating step according to the present invention is preferably incorporated.

In the coating process the precursor(s) may be applied by evaporating them and subsequently blowning them perpendicular to the surface of the tiles to be coated. Depending on *e.g.* concentration of the precursor(s) the film thickness can be controlled. Combination of thickness and type of applied metal oxide(s), the reflection of light or gloss can be controlled.

For economical or logistical reasons either on-line or off-line process can be chosen. The decision depends on economical contempt tion's considering volumes and logistical issues. In the off-line process, the tiles to be coated are transported to a treatment line at any location. The tiles must be reheated and thereafter coated similarly as in on-line process.

Application temperature showed influence on the adherence of the applied film. Therefore a CVD process to apply said metal oxides is preferential over spraying, this because spraying causes significant cooling of the surface. A temperature shock effect will occur.

In tile production, the cooling between 650-550°C is usually done slowly, to avoid thermal stress during the quartz transformation. Thermal stress causes cracks and will also influence the mechanical strength of the tiles.

Ceramic tiles are prepared by coating a ceramic support with one or several glaze layers, at least one of them being a mixture of melted oxides (frits) blended with ceramic pigments and organic rheology modifiers. Ceramic glazes, as known by the skilled person, are made up of a mixture of frits, raw materials and additives. Frits are melted mixtures of oxides which have been water quenched. The batch is wet milled and applied on a ceramic substrate on which an engobe layer has been applied. the engobe layer is made of clays, frits and raw materials to achieve the required properties. The prepared tiles are fired in a temperature range between 1120 and 1250°C. The temperature program used, has to allow the outgasing from the support, closing of porosity and sealing of the surface.

According to the invention the coater to apply metal oxides may be implemented on-line, in the appropriate temperature zone, using the heat released by the tile. Off-line processes are also considered advantageous in some situations, since off-line processes may take into account the flexibility of a ceramic production process, which often comprises the same kiln for different products (such as wall tiles or floor tiles; change of model, *etc.)* and of the air recirculation system.

It is preferred to carry out the method of the invention using an organometal halide or metal halide as the precursor. Even more preferably a tinhalide is used and most preferable a mono alkyl tin halide, such as monobutyl tin trichloride (MBTC). MBTC is preferred because of its ease of handling, safe and economical use.

The method of the invention can be used to coat to any glazed article, such as glazed ceramic or metal articles. In particular the method is suitable for producing tiles, since tiles are notably subject to abrasion, whereas it is often required that they have a sufficiently high coefficient of friction and that they pertain their gloss. This is especially the case for floor tiles. By applying the metal oxide coating to floor tiles, in accordance with the present invention, the friction coefficient can be increased. This is in sharp contrast with prior art methods of applying metal oxide coatings, such as the above-mentioned US-A-4 144 362, WO-A-96/26 163 and EP-A-0 485 646, which are directed to a decrease of the friction coefficient, which may be obtained by adding an additional wax coating.

In order to obtain a good balance between mechanical and aesthetic properties, it is preferred that the precursor is applied such that a coating with a thickness of less than 50 nm, preferably from 2-25 nm, most preferably from 5-20 nm is obtained. The refractive index of the applied coating is usually higher than the refractive index of the substrate. As a result of this additional reflection of visible light will occur. For thin coatings, this results in the so-called "silver mirror effect", *i.e.* reflection of visible light. The intensity of reflection becomes higher with increasing layer thickness. When the thickness of the layers is increased above 25 nm, the amount of reflection becomes too high and because of that the aesthetic properties of the coated article are effected in a negative way. When the thickness of the layers increases further above 25 nm, in particular above 50 nm, selective reflection of colours from the visible light spectrum may occur. Also interference of colours (the so-called "iridescence effect") increases at these higher values of layer thickness. Furthermore, layers having a thickness of more than 500 nm often develop a greyish colour and such coatings are difficult to apply homogeneously.

A layer thickness of at least 2 nm is required to have a sufficient improvement with respect to coefficient of friction and/or abrasion resistance.

The above-mentioned adverse effects make glazed articles unsuitable for applications were aesthetic value is important, which is the case e.g. with the above-mentioned floor tiles.

The thickness of the coating can conveniently be controlled by varying process parameters, such as application rate of the vapour, concentration of precursor or speed of the article through the coating step.

### Brief description of the drawings

Figure 1 shows a typical heating profile for tile production.
Figure 2 shows the abrasion resistance quality for tiles coated at different temperatures.
Figures 3A-C show the results obtained by atomic force microscopy (AFM) of tile number 1, 2 and 7, respectively, from Example 6 below, prior to abrasion test.

The invention will be illustrated by the following examples.

### Examples

In the examples a glazed tile is coated by the method of the invention, unless when indicated otherwise.

The tile to be coated was preheated to the desired temperature in an oven and held at that temperature for at least 15 minutes. Thereafter the sample was transferred on a conveyor through the coating zone. The performance was checked by measuring the Mohs hardness, gloss and most relevant, the abrasion resistance quality. Surprisingly the substrate temperature was found to be the most important parameter of the coating process. The precursor used in below described examples, is monobutyltin trichloride (MBTC).

The following measurements were carried out on the samples.

### Brightness

Brightness was measured by evaluating the reflected light at different angles. The used angle was 60°. Surfaces were considered to be very glossy when a greater part of light is reflected (reflection > 85 %o) in the main direction of reflection. A reflection of about 85-92 ‰ corresponds to the value measured for an uncoated tile.

Surfaces were considered matt when a large part of the light is scattered (reflection < 60 ‰). This gloss measurement is also used for controlling the applied layer thickness, due to additional reflection of the coating, a higher gloss value is obtained.

### Abrasion resistance:

For measuring this property a special equipment which stimulates the practice was used. A sample is put on a turning table having a speed of 10 rpm. An abrasive material, coarse quartz (beach sand, particle size about 200-400 µm) is spread over the surface. A mechanical shoe transfers, while moving over the surface, a certain load. The quartz and shoe together have an abrasive effect. Measuring the gloss reduction in time gives a realistic impression about the abrasion resistance of the tested samples.

### Example 1: Variation in film thickness

Three tiles measuring 10 cm x 10 cm were handled as described above. The feeding of the precursor to the coating equipment was kept constant at 48 g/h, while the tile transport time was varied. The tiles were judged on their initial gloss and abrasion resistance.

The following results were obtained:

| Sample no. | Oven temp. ° C | Conveyor speed Seconds/10 cm | Gloss %o | Mohs hardness |
|---|---|---|---|---|
| Reference | | | 91 | 3 |
| 1 | 600 | 6 | 120 | 4-5 |
| 2 | 600 | 13 | 170 | 5 |
| 3 | 600 | 18 | 199 | 5 |

### Example 2: Variation in application temperature

The conditions used were as in Example 1, except for the heating oven or application temperature.

The following results were obtained.

### 1. coated samples

| Sample no. | Oven temp. ° C | Conveyor speed Seconds/10 cm | Gloss ‰ | Mohs hardness |
|---|---|---|---|---|
| 4 | 500 | 13 | 150 | 5-6 |
| 5 | 600 | 13 | 163 | 5-6 |
| 6 | 700 | 11.5 | 164 | 5-6 |
| 7 | 800 | 11.5 | 154 | 5 |

### 2. reference samples (same treatment but "coated" with air)

| Sample no. | Oven temp.°C | Conveyor speed Seconds/10 cm | Gloss ‰ | Mohs hardness |
|---|---|---|---|---|
| 4-ref | 500 | 13 | 91 | 3 |
| 5-ref | 600 | 13 | 91 | 3 |
| 6-ref | 700 | 11.5 | 91 | 3 |
| 7-ref | 800 | 11.5 | 91 | 3 |

### Example 3: Abrasion effects (reference)

In this example abrasion tests were carried out in accordance with the above-mentioned abrasion resistance test with standard non-coated tiles.

| Abrasion time Minutes | Gloss std-1 ‰ | Remaining Gloss std-1 % | Gloss std-2 ‰ | Remaining Gloss std-2 % |
|---|---|---|---|---|
| 0 | 90 | 100 | 90 | 100 |
| 2 | 64 | 71 | 64 | 71 |
| 4 | 42 | 47 | 42 | 47 |
| 6 | 25 | 28 | 25 | 28 |
| 8 | 16 | 18 | 16 | 18 |
| 10 | 8 | 9 | 8 | 9 |
| 12 | 8 | 9 | 8 | 9 |
| 15 | 5 | 6 | 5 | 6 |

### Example 4: Abrasion effects

In this example the above-mentioned abrasion tests were carried out with coated tiles, both samples 8 and 9 were heated up to 600°C. For aesthetic reasons the conditions were chosen in such a way that gloss was limited to about 110°.

| Abrasion time Minutes | Gloss no-8 ‰ | Remaining Gloss no-8 % | Gloss no-9z ‰ | Remaining Gloss no-9 % |
|---|---|---|---|---|
| 0 | 110 | 100 | 108 | 100 |
| 2 | 110 | 100 | 113 | 105 |
| 4 | 110 | 100 | 107 | 99 |
| 6 | 104 | 95 | 102 | 94 |
| 8 | 97 | 88 | 98 | 91 |
| 10 | 87 | 79 | 89 | 82 |
| 12 | 73 | 66 | 80 | 74 |

### Example 5: Abrasion effects

In this example the above-mentioned abrasion tests were carried out with coated tiles, which were coated at different temperatures. For aesthetic reasons the conditions were chosen in such a way that gloss was limited to about 120°.

| Abrasion time Minutes | Oven Temp 450°C (Sample no. 10) Gloss | | Oven Temp 500°C (Sample No. 11) Gloss | | Oven Temp 600°C (Sample No. 12) Gloss | | Oven Temp 700°C (Sample No. 13) Gloss | |
|---|---|---|---|---|---|---|---|---|
| | Value ‰ | % | Value ‰ | % | Value ‰ | % | Value ‰ | % |
| 0 | 115 | 100 | 108 | 100 | 106 | 100 | 123 | 100 |
| 2 | 110 | 96 | 111 | 103 | 109 | 103 | 97 | 79 |
| 4 | 106 | 92 | 111 | 103 | 104 | 99 | 86 | 70 |
| 6 | 101 | 88 | 110 | 102 | 104 | 99 | 78 | 63 |
| 8 | 92 | 80 | 108 | 100 | 103 | 97 | 66 | 54 |
| 10 | 83 | 72 | 107 | 99 | 96 | 91 | 44 | 36 |
| 12 | 72 | 63 | 102 | 94 | 97 | 92 | 23 | 19 |
| 15 | 61 | 53 | 101 | 94 | 76 | 72 | 15 | 12 |

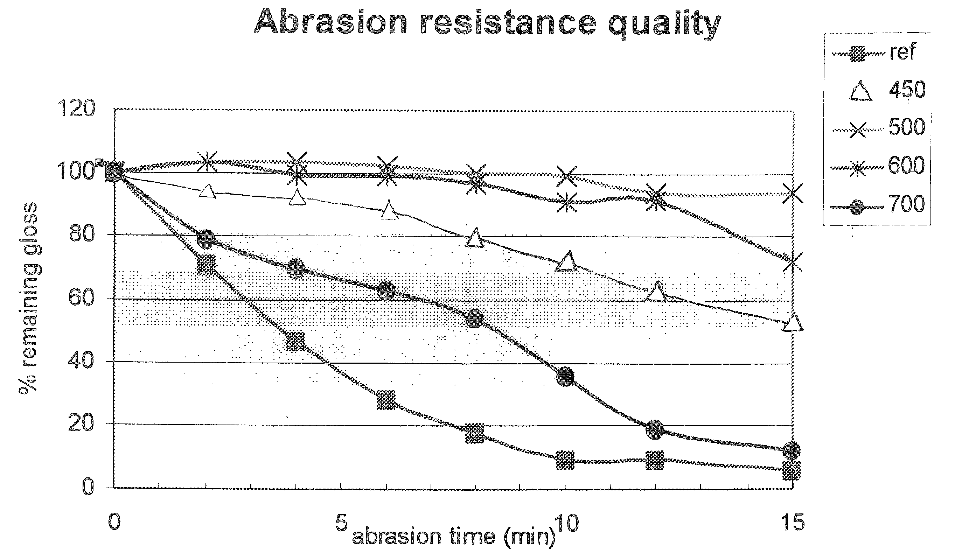

In Fig.2 an overview is plotted of Examples 3 and 5.

### Example 6: Abrasion effects

Samples were prepared according to table below:

| Nr. | AFM Fig. | Oven temp. °C | MBTC feed g/h | gloss %o | average Ra nm | remaining gloss (after 12 min abrasion) % |
|---|---|---|---|---|---|---|
| 1 | 3A | 500 | 39 | 136 | 1.62 | 83 |
| 2 | 3B | 500 | 39 | 105 | 0.9 | 94 |
| 3 | | 500 | 39 | 136 | 3.07 | 72 |
| 4 | | 500 | 39 | 109 | 1.4 | 92 |
| 5 | | 500 | 39 | 108 | 0.68 | 90 |
| 6 | | 500 | 39 | 92 | 1.34 | 79 |
| 7 | 3C | 600 | 39 | 118 | 1.63 | 80 |
| 8 | | 600 | 39 | 118 | 2.13 | 80 |
| 9 | | 700 | 34 | 96 | 3.1 | 35 |
| 10 | | 700 | 34 | 98 | 1.87 | 78 |

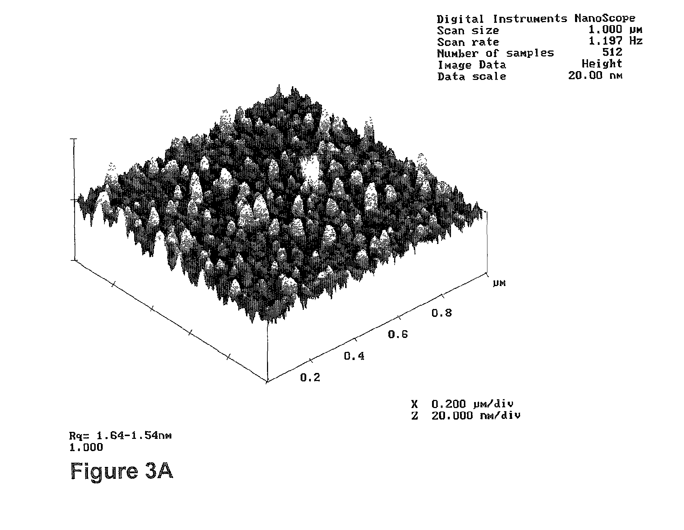

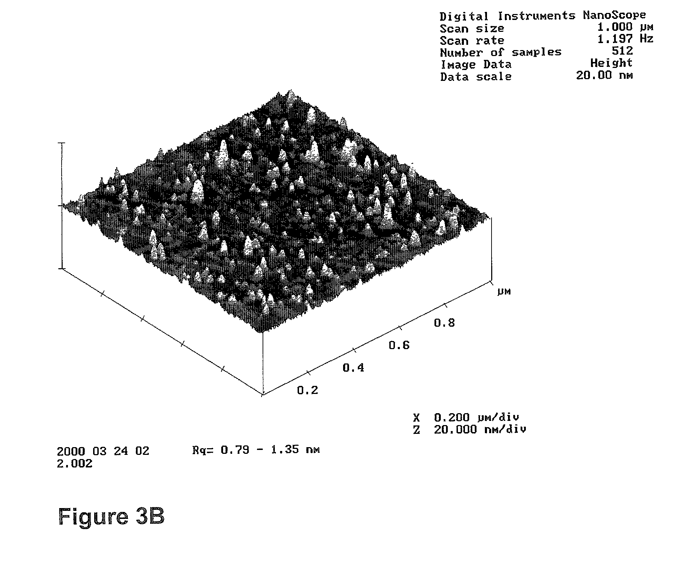

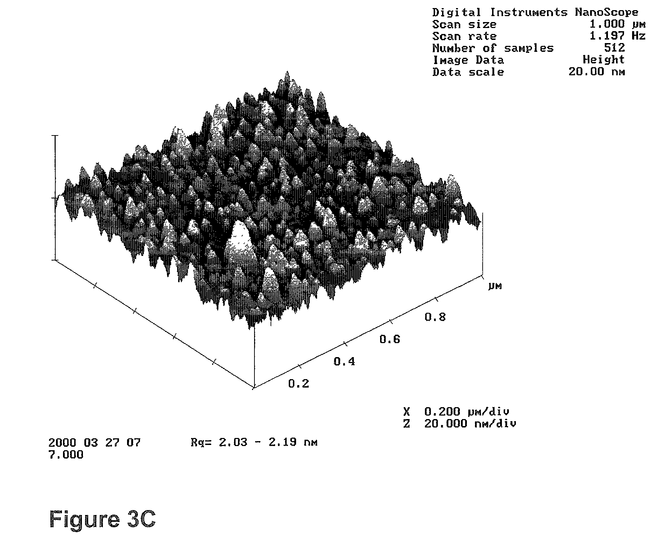

The tiles were subjected to the above-mentioned abrasion tests for 12 minutes. Figures 3A-3C show the results obtained by atomic force microscopy (AFM) of the tiles from sample 1, 2 and 7, respectively, prior to the abrasion test. From the results of the AFM, the average roughness, Ra (expressed in nm) may be obtained. Ra ranged from 1.54-1.64, 0.79-1.35 and 2.03-2.19 nm, for sample 1, 2 and 7, respectively.

The table above also shows the remaining gloss after the 12 minutes abrasion test (as percentage of the initial gloss). It follows that higher abrasion resistance is obtained for tiles having a lower initial Ra.

## Claims

1. Method for producing glazed articles having improved coefficient of friction and/or abrasion resistance, comprising providing a glazed article, and contacting said glazed article at a temperature of at least 400°C with a metal containing coating precursor, whereby a metal oxide coating on said article is formed.

2. Method according to claim 1, wherein said precursor is applied using atmospheric chemical vapour deposition.

3. Method according to claim 1 or 2, wherein said temperature of said article is between 450 and 700°C, preferably between 475 and 525°C.

4. Method according to claim 3, wherein said temperature is about 500°C.

5. Method according to any of the previous claims, wherein said precursor is an organometal halide or a metal halide.

6. Method according to claim 5, wherein said precursor is an organotin halide, preferably monobutyl tin trichloride.

7. Method according to any of the previous claims, wherein said article is a tile, preferably a floor tile.

8. Method according to any of the previous claims, wherein said precursor is applied such that a coating with a thickness of less than 50 nm, preferably from 2-25 nm, is obtained.

9. Method according to claim 8, wherein said precursor is applied such that a coating with a thickness of 5-20 nm, is obtained.

10. Tile comprising a glaze layer, having provided on said glaze layer a metal oxide coating obtainable by the process of claims 1-9.

11. Tile according to claim 10, which coating has a thickness of less than 50 nm, preferably from 2-25 nm.

12. Tile according to claim 9-11, wherein said coating has a thickness of 5-20 nm.

13. Tile according to claim 9-12, wherein said coating is a tin oxide coating.
